# EUROPEAN PATENT SPECIFICATION

(11) **EP 1 768 329 B1**
(45) Date of publication and mention of the grant of the patent: **18.01.2012**
(21) Application number: 05783997.9
(22) Date of filing: 09.09.2005
(51) Int. Cl.: H04L 12/18, G06F 21/00, H04L 29/06, H04N 7/16, H04N 21/4623, H04N 21/258, H04L 12/56

(54) **A METHOD AND A SYSTEM OF REALIZING THE PREVIEW OF MUTILCASTING VIDEO PROGRAM IN THE WIDE-BAND ACCESS NETWORK**
VERFAHREN UND SYSTEM FÜR DIE VORANSICHT VON MULTICASTING-VIDEOPROGRAMMEN IN EINEM BREITBANDZUGANGSNETZ
PROCEDE ET SYSTEME DE REALISATION DE L'APERÇU D'UN PROGRAMME VIDEO MULTI-DIFFUSION DANS UN RESEAU D'ACCES LARGE BANDE

(30) Priority: 23.09.2004 CN 200410078298
(43) Date of publication of application: 28.03.2007
(73) Proprietor: Huawei Technologies Co., Ltd., Longgang District, Shenzhen Guangdong 518129 (CN)
(72) Inventor: LUO, Yong, Huawei Administration Building, Shenzhen, Guangdong 518129 (CN)
(74) Representative: Körber, Martin Hans
(86) International application number: PCT/CN2005/001444
(87) International publication number: WO 2006/032188

(56) References cited:
- EP-A- 1 289 297
- EP-A- 1 367 774
- EP-A- 1 633 144
- WO-A-02/45334
- WO-A-2004/043022
- WO-A1-2004/043022
- CA-A1- 2 321 805
- CN-A- 1 463 122
- JP-A- 2003 158 547
- US-A1- 2002 172 368
- US-A1- 2003 037 132
- US-A1- 2004 025 013
- KRUUS P S ET AL: "Techniques and issues in multicast security" MILITARY COMMUNICATIONS CONFERENCE, 1998. MILCOM 98. PROCEEDINGS., IEE E BOSTON, MA, USA 18-21 OCT. 1998, NEW YORK, NY, USA,IEEE, US, vol. 3, 18 October 1998 (1998-10-18), pages 1028-1032, XP010307977 ISBN: 978-0-7803-4506-5
- "DELIVERING MULTICAST VIDEO OVER ASYMMETRIC DIGITAL SUBSCRIBER LINE" CISCO WHITE PAPER, XX, XX, 1 January 1999 (1999-01-01), pages 1-14, XP002259717

## Description

### Field of the Invention

The present invention relates to network communication, and particularly to a method and system for implementing preview of multicast video programs in a broadband access network.

### Background of the Invention

At present, the broadband access network mainly bears data traffic, and is a blank in providing video services. However, during the procedure of operating the network, services which can attract subscribers are not only convenient and rapid data services, but also video services with abundant contents. To the broadband access network, one of the important factors which limit the increase of broadband subscribers is content. Although at present the broadband access network can provide subscribers with abundant information contents, there is still a lack of content or operating mode which can attract a mass of subscribers like TV, that is, an operating mode of video services which is already accepted by most subscribers can not be provided for subscribers. Therefore, to telecommunication carriers, whether to hope to be a real full service carrier so as to occupy the cable television market with high income, or only hope to attract more subscribers to adopt the broadband network, by developing broadband value-added services with attractions, it will be the emphases in the next step of development of broadband access network to utilize multicast technology to develop video services.

Multicast video services, as telecommunication value-added services, have basic operable and manageable requirements. If it is required to implement the operation and management of multicast video services, it is required to implement: identifiableness of requesting subscribers, identifiableness of video programs requested, configuration and management of qualifications of video programs requested by subscribers, verification of requests in accordance with subscriber qualifications, recordation of time spots for viewing and leaving program of subscribers.

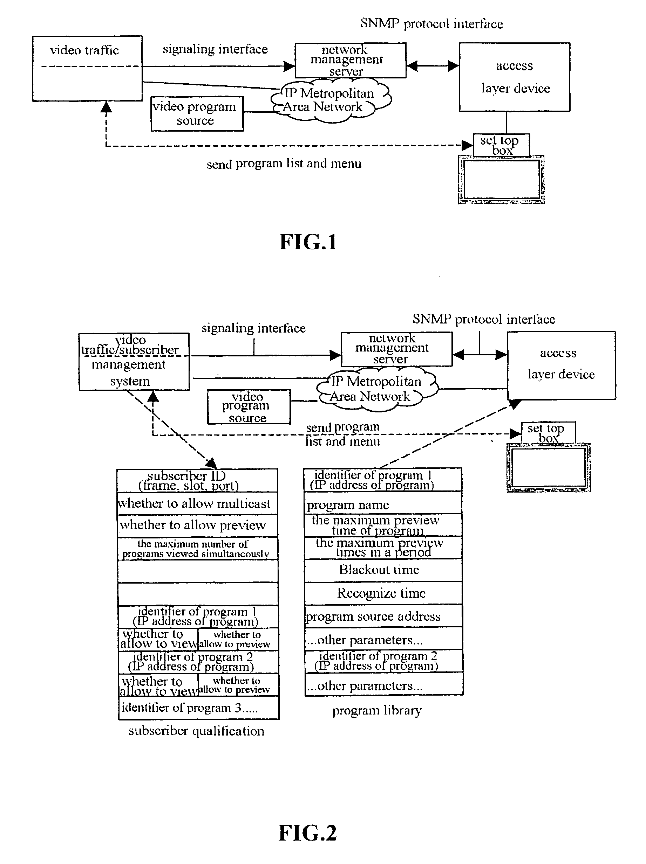

Controllable multicast requires a network device in the access layer (abbreviated as the access layer device) to serve as a control point of the multicast services, as shown in FIG.1, which is adapted to implement controlled access of a video program, and the multicast qualification of each subscriber can be configured at the access layer device, including whether to allow receiving a multicast program, programs allowed to be received, and the number of programs allowed to be received simultaneously. The qualification can be configured in real time by command line or network management interface. After a subscriber subscribes a video service, the qualification will be created by a video traffic/subscriber management system and sent to the network device in the access layer through a network management server, and the network device in the access layer guarantees that the configuration takes effect immediately.

In order to facilitate subscribers to choose favorite video programs to view and attract more subscribers who haven't purchased video services, carriers usually allow subscribers to try to view some video program in a short time period. If a subscriber chooses a certain video program, he can access formally and view the video program. In this case, the carrier can perform a corresponding charging operation. Qualification administration is also required to be performed on such preview of video program based on the subscriber and the program, such as limiting on preview time, preview times of a subscriber, etc.

It can be seen easily that if corresponding preview function is provided for video services in the broadband access network, the numbers of accessed subscribers can be increased greatly. However, at present, there is no technical solution of implementing corresponding preview for video traffic in the broadband access network.

### Summary of the Invention

An embodiment of the present invention provides a method and system for implementing preview of multicast video programs in a broadband access network, in order to facilitate carriers to provide operable and manageable multicast video traffic in the broadband access network.

The object of the present invention is implemented with the following technical solution.

An embodiment of the present invention provides a method for implementing preview of multicast video programs in a broadband access network, including:

A. storing preview qualification of a subscriber in an access layer device;

B. controlling, at the access layer device, the subscriber to preview the video traffic in accordance with the preview qualification.

Wherein the method further includes:

creating the preview qualification of the subscriber, and sending the preview qualification together with program information to a network management server through a signaling interface, by a video traffic/subscriber management system;

sending the preview qualification and program information from the network management server to the access layer device through a Simple Network Management Protocol (SNMP) interface.

The preview qualification includes:

one or more selected from whether to allow the subscriber to preview, programs allowed to be previewed, allowed preview time, and preview times allowed within a set time.

The step of controlling, at the access layer device, the subscriber to preview the video traffic in accordance with the preview qualification further includes the steps of:

B1. sending a request message for joining the multicast service group under Internet Group Management Protocol (IGMP) from the subscriber to the access layer device;

B2. performing, at the access layer device, preview verification on the request message from the subscriber without qualification of viewing the program, in accordance with information carried in the request message and the stored preview qualification, and allowing the subscriber to perform the program preview upon a successful verification.

In the method according to an embodiment of the present invention, the preview verification includes the steps of:

determining whether the subscriber has a qualification to preview the requested program and whether preview times exceeds the allowed preview times in accordance with the stored preview qualification of the subscriber; if the subscriber has no qualification to preview the requested program or preview times exceeds the allowed preview times, refusing the request from the subscriber; otherwise allowing the subscriber to preview the program.

In the procedure during which the subscriber previews the requested program, monitoring whether the preview time exceeds the allowed preview time; if yes, terminating the preview.

In the method according to an embodiment of the present invention, when the access layer device includes one or more subscribers, the method further includes: monitoring whether the preview time of each video channel exceeds the allowed preview time respectively, and terminating only the preview of the video channel with the exceeded preview time;

or monitoring whether the preview time of all video channels exceeds the allowed preview time simultaneously; if yes, terminating the preview of all video channels.

The method further includes: setting a timer for each video channel respectively, performing timing of preview time;

or setting only one timer, performing timing of preview time for each subscriber or each video channel;

or setting only one timer, and setting a counter for each video channel respectively, performing timing of preview time for each video channel through the cooperation of the timer and the counter.

The step of terminating the preview includes:

deleting the video channel or the subscriber from the multicast program group.

The method further includes following steps before the step B2:

determining, at the access layer device, whether the subscriber has a video channel capable of transmitting video traffic; if yes, going to step B2; otherwise refusing the request from the subscriber.

The method further includes:

determining, at the access layer device, whether the time from the previous preview disconnection instant to this preview request instant is longer than the set time; if yes, allowing the subscriber to perform the program preview, otherwise not allowing.

The method further includes the following steps after the step of allowing the subscriber to perform the program preview:

determining whether the preview duration for the same program is longer than the set time value; if yes, determining the preview is a valid preview, increasing the preview times by 1, and performing a record of log and calling data record; otherwise, keeping the preview times unchanged, and not performing a record of log and calling data record.

Another embodiment of the present invention provides a system for implementing preview of multicast video programs in a broadband access network, including:

a video traffic/subscriber management system server, for obtaining subscriber preview qualification information for video traffic, and sending the qualification information with the program information to a video preview processing part;

the video preview processing part, located in the access layer device, for obtaining and storing the preview qualification information and program information, managing the video traffic developed by the subscriber in accordance with the preview qualification and program information.

The system further includes a network management server, for storing, managing and distributing the preview qualification information and program information.

The embodiments of the present invention provide preview function of the multicast programs in a broadband access network, which improves attraction of multicast video services to common subscribers; and implements control of preview qualification of the multicast programs, implements different preview policies for different programs, divides customers of the services elaborately, improves service flexibility, enables the carriers to operate and manages video services developed based on the broadband access network. Embodiments of the present invention adopt reasonable technical means to implement preview timing and times management, improving processing and resource utilization efficiency.

### Brief Description of the Drawings

FIG.1 is a diagram illustrating the implementation of multicast video service in a traditional network;

FIG.2 is a diagram illustrating the implementation of multicast video service according to an embodiment of the present invention;

FIG.3 is a flow diagram of the method according to an embodiment of the present invention;

FIG.4 is a flow diagram of the preview and authentication procedure of a subscriber according to an embodiment of the present invention;

FIG.5 and FIG.6 are flow diagrams of overtime event processing of two timers according to an embodiment of the present invention.

### Detailed Description of the Invention

According to embodiments of the present invention, a function of preview of video programs for accessed subscribers at the access layer device is provided, i.e., the service control point, which can both facilitate operating management of carriers and provide accessed subscribers with great convenience to choose video programs.

In an embodiment of the present invention, as shown in FIG.2, the implementation of the function of preview of multicast video programs is described as follows.

Firstly, the management of preview qualifications of subscribers is added in a video traffic/subscriber management system. The preview qualifications of subscribers are created by the video traffic/subscriber management system, and include: whether to allow a subscriber to preview, programs allowed to be previewed by a subscriber, etc.

Different preview policies are needed to be provided for different programs. The longest preview time of different programs and the most preview times in a period are needed to be set in a program library.

In order to avoid that a subscriber views a whole program with the method of preview for many times, it is required that when a subscriber previews the same program, there is a determined time period between the two previews, and this time parameter is called blackout time.

When a subscriber switches the preview channel frequently, it may be caused that the permitted preview times for a certain program are used up by the subscriber rapidly. In order to avoid this, a parameter, recognize time, is set. The main function of the parameter is that the preview duration must be longer than the recognize time, otherwise the preview is not considered as a legal preview. Moreover the preview times will not be decreased, and the log and calling data record are not recorded.

The above parameters are set for different programs, belonging to program library parameters. The program library is created dynamically by the video traffic management system and sent to the access layer device together with the subscriber qualifications (including the preview and viewing qualifications).

Then, the subscriber qualifications (including preview and viewing qualifications) and the program library are configured to a network management server through a signaling interface by the video traffic/subscriber management system, and distributed to the access layer device through a Simple Network Management Protocol (SNMP) interface by the network management server.

After receiving the subscriber qualifications and the program library from the network management server or a multicast policy distributing server, the access layer device updates the subscriber qualifications and the program library stored in the device, and stores into a system configuration database. In this case, the subscriber can preview the allowed program through the access layer device. The access layer device performs verification on the subscriber preview qualification and controls the entering and leaving of the subscriber preview during the preview.

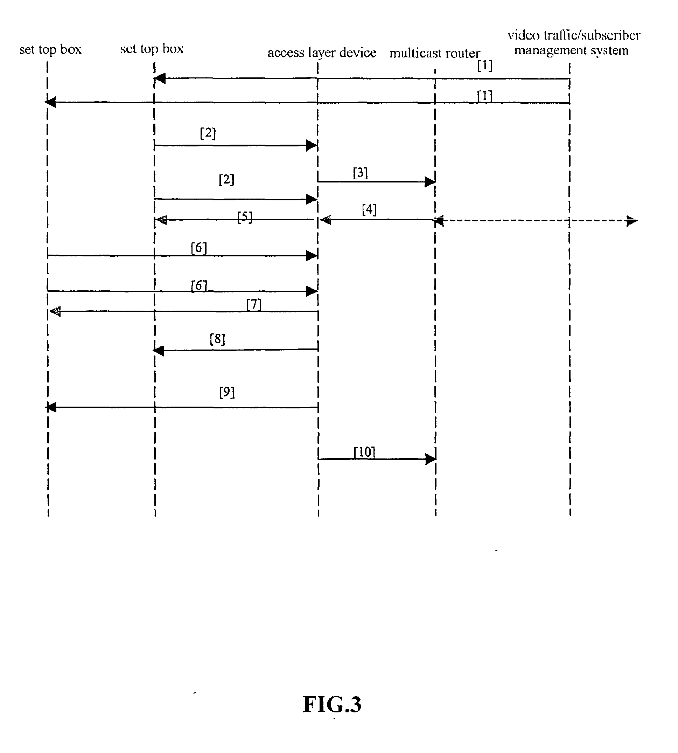

The method according to an embodiment of the present invention will be further described with reference to the attached drawings. Referring to FIG.3, the method according to an embodiment of the present invention includes the procedures as follows:

Procedure [1]: the video traffic/subscriber management system creates a real-time electronic program menu, which is sent to set top boxes of subscribers, such as set top box 1 and set top box 2 shown in FIG.3. The electronic program menu is displayed on the television screen in real time. The subscriber can view the corresponding electronic program menu as soon as he turns on the television, so that the subscriber can perform multicast program on demand through a remote controller and the like.

Procedure [2]: after subscriber 1 accessed through set top box 1 requests program 1, set top box 1 creates an IGMP Join (Internet Group Management Protocol) message, and sends the message to the access layer device; information carried in the message includes: (Media Access Control) MAC address and IP address of the set top box of a subscriber, IP address of the multicast program requested;

Procedure [3]: after receiving the IGMP Join message from subscriber 1, the access layer device performs verification processing on the message, i.e., examines whether the subscriber can receive the multicast traffic;

In accordance with qualification management contents provided in the system configuration database of the access layer device, the verification processing may include: determining whether subscriber 1 has a qualification to view program 1; if not, continuing to check whether subscriber 1 has a qualification to preview program 1; if subscriber 1 has no qualification to view program 1 but has a qualification to preview program 1, the maximum preview times of program 1 does not expire, and the time from the disconnection instant of previous preview of program 1 to this access instant is longer than the blackout time, then the access layer device sets the state machine of subscriber 1 to preview, records the preview access instant of program 1 for the subscriber 1, and starts a preview timer 1 for subscriber 1.

The access layer, as an IGMP proxy, further checks whether the program group has already a member joined. If set top box 1 is the first member of program group 1, the access layer sends an IGMP Join message to an upper layer multicast router, to join program group 1 containing program 1, so that the access layer device can be a member of program group 1 in the upper layer multicast router, and the access layer device thus can obtain video stream of program 1, then goes to procedure [4]. If set top box 1 is not the first member of program 1, the verification processing goes to procedure [5].

Procedure [4]: after receiving the IGMP Join message from the access layer device, upper layer multicast router sends multicast stream of program group 1 to the access layer device.

In accordance with network circumstance and subscriber access circumstance, the multicast router may be required to exchange multicast routing information with the upper layer device under Protocol Independent Multicast/Internet Group Management Protocol (PIM/IGMP), a procedure of which is not limited in the present invention.

Procedure [5]: after receiving the multicast stream from the multicast router, the access layer device multicasts the multicast router to a corresponding subscriber port. In this case, the subscriber can preview program 1.

If when subscriber 1 using set top box 1 is previewing program 1, subscriber 2 also requests program 1, the verification processing goes to procedure [6], i.e., the set top box 2 also creates an IGMP Join message, and sends the IGMP Join message to the access layer device.

Procedure [7]: after receiving the IGMP Join message, the access layer device performs verification on the qualification of subscriber 2 applying for viewing program 1; if subscriber 2 has no qualification to view program 1 but has a qualification to preview program 1, the maximum preview times of program 1 does not expire, and the time from the disconnection instant of previous preview of program 1 to this access instant is longer than the blackout time, then the access layer device sets the state machine of subscriber 2 to preview, records the preview access instant of program 1 for the subscriber 2, and starts a preview timer 2 for subscriber 2. Then the access layer device forwards the multicast stream of program 1 to a port serving subscriber 2.

Procedure [8]: when the preview timer for subscriber 1 expires, the access layer device deletes the port serving subscriber 1 from program group 1, does not forward the multicast stream of program 1 to the port serving subscriber 1 any more, records the disconnection instant for program 1 viewed by the subscriber, and checks whether the time from the access instant to the disconnection instant is longer than the recognize time; if yes, the access layer device increases the preview times of subscriber 1 by 1, and records the log and calling data record, and sets the state machine of subscriber 1 to offline.

Procedure [9]: when receiving a Leave message for leaving program 2 from subscriber 2 and confirming the leaving, the access layer device deletes the port serving subscriber 2 from program group 1, does not forward the multicast stream of program 1 to the port serving subscriber 2 any more, records the disconnection instant for program 1 viewed by the subscriber, and checks whether the time from the access instant to the disconnection instant is longer than the recognize time; if yes, the access layer device increases the preview times of subscriber 2 by 1, and records the log and calling data record, and sets the state machine of subscriber 2 to offline.

Procedure [10]: if there is no subscriber to viewing program group 1, the access layer device sends an IGMP Leave message to the multicast router, instructs not to forward the multicast stream of program 1 any more. The packet contains MAC address and IP address of the access layer device, and IP address of the program requested to be deleted. After receiving the IGMP Leave message, the multicast router terminates the forwarding of data of program 1 to the access layer device.

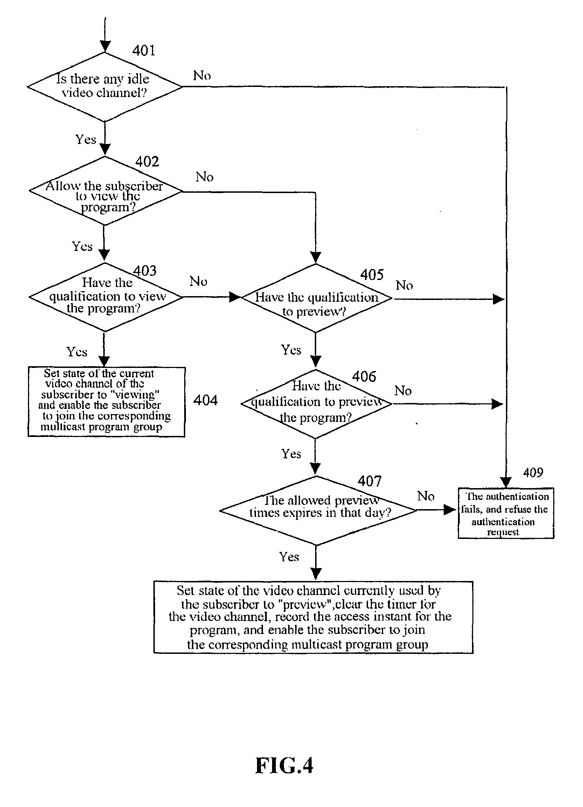

The verification procedure of the subscriber preview by the access layer device according to an embodiment of the present invention will be described with reference to the attached drawings, as shown in FIG.4, including the processing steps as follows.

In step 401, the subscriber qualifications stored in the access layer device specify the maximum number of programs to be viewed simultaneously (one set top box corresponds to one subscriber to the access layer device), i.e., the maximum number of video channels under the same set top box, or the number of video terminals allowed to be accessed under the subscriber, or the number of windows in "Picture-in-Picture" function. After receiving a verification request from the subscriber, the access layer device checks whether the subscriber has idle channels to accommodate programs; if yes, the procedure goes to step 402, otherwise goes to step 409.

In step 402, a switch is provided in the subscriber qualifications in the access layer device, adopted to control whether to allow the subscriber to view a program. During the verification procedure, the switch is checked first. If the state of the switch indicates allowed, the procedure goes to step 403, otherwise goes to step 409.

In step 403, whether the subscriber has a qualification to view each program is provided in the subscriber qualifications. During the verification, program ID (IP address of the program) and subscriber ID carried in a message are used to match the subscriber qualification, to determine whether the subscriber has a qualification to view the program; if yes, the procedure goes to step 404, otherwise goes to step 405.

In step 404, the state of the used video channel of the subscriber is set to "viewing". The multicast router enables the subscriber to join the corresponding multicast program group.

The subscriber video channels are presented as a control table in software, which includes two contents, wherein one is the state of subscriber video channels, whose value can be "viewing", "preview", "idle", the other is the preview timer, adopted to compute the preview time of subscriber video channels.

In step 405, a switch controlling whether the subscriber can preview is further provided in the subscriber qualifications in the access layer device, to determine whether the subscriber has a preview qualification; if yes, the procedure goes to step 406, otherwise goes to step 409.

In step 406, similarly to viewing qualification of the subscriber, for the preview, whether the subscriber has a qualification to preview each program is defined in the subscriber qualifications; if the subscriber has a preview qualification, the procedure goes to step 407, otherwise goes to step 409.

In step 407, in order to avoid the subscriber to preview overly, the maximum preview times of a program within one period is defined in the program library, wherein the period can be one day, one week, etc., set by the subscriber. The currently previewed times of each program by the subscriber are recorded in the software of the access layer device. The previewed times can be generally cleared by the timer per one period.

The verification procedure determines whether the allowed maximum preview times for the requested program has expired; if yes, the preview verification fails, and the procedure goes to step 409, otherwise goes to step 408.

In step 408, the access layer device sets the state of the currently used video channel of the subscriber to "preview", clears the timer for the current video channel of the subscriber, records the access instant of the subscriber for a specified program, and enables the subscriber to join the corresponding multicast program group.

In step 409, the verification procedure fails, and the verification request is refused.

The access layer device may need to process thousands of subscriber preview requests at one time. If each subscriber starts a separate preview timer when entering into the preview state, a lot of timer resources will be wasted, and the start and overtime processing of a lot of timers will occupy lots of CPU time, so the efficiency will be seriously influenced.

Therefore, in the implementation of an embodiment of the present invention, only two timers can be used, wherein one is a period timer, with simple functions, adapted to clear the preview times of a subscriber in each predetermined period, i.e., clear the preview times of the subscriber when the timer expires; the other is a reference timer, with a period of 1 second or 10 milliseconds, adapted to time the preview behavior of a subscriber. After the reference timer is started, an overtime event will be created per 1 second or 10 milliseconds and sent to the software control part adopted to manage preview timing in the access layer device. When receiving the event, the software control part checks all video channels of the subscriber orderly. If the state of one of the video channels is preview, the software control part increases the counter for preview timing by 1, and compares the counter and the preview time (i.e., timer value) allowed in the preview qualification. If the preview time determined by the timer has exceeded the allowed preview time, the software control part sends an overtime preview event to an online/offline control module in the access layer device, and deletes the subscriber from the corresponding program group in the multicast router as required, to end the preview.

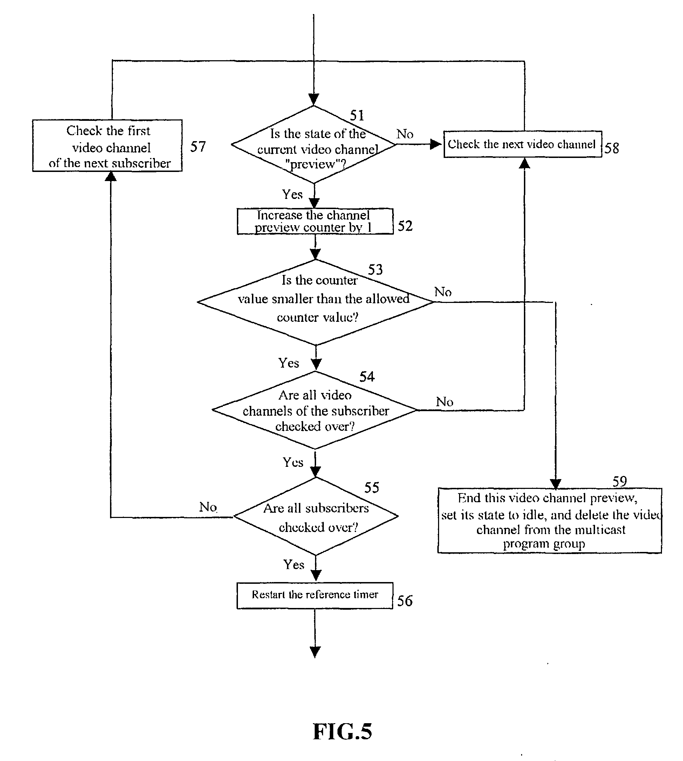

Referring to FIG.5, the processing procedure of the overtime event of timer will be described with further reference to the attached drawings. When the reference timer expires, the corresponding processing procedure includes the steps as follows.

In step 51, the access layer device determines whether the state of the current video channel is preview; if yes, the procedure goes to step 52, i.e., increase the counter for the preview timing of the video channel by 1, and goes to step 53; otherwise goes to step 58, i.e., check the next video channel, and then goes to step 51;

In step 53, the access layer device determines whether the counter value is less than the allowed counter value; if yes, the procedure goes to step 54, otherwise goes to step 59, i.e., end the preview of the video channel, set the state to "idle", and inform the multicast router to delete the video channel from the multicast program group;

The allowed counter value can be determined in accordance with the allowed preview time and the time of the reference timer. For example, the reference timer sets 1 second, the allowed preview time sets 20 seconds, then the corresponding allowed counter value can be set to 20 seconds. When the counter value reaches or exceeds 20 seconds, the access layer device determines the preview time of the video channel has expired;

In step 54, the access layer device determines whether all video channels of the subscriber are checked over; if yes, the procedure goes to step 55, otherwise goes to step 58;

In step 55, the access layer device determines whether video channels of all subscribers are checked over; if yes, the procedure goes to step 56, i.e., restart the reference timer, otherwise goes to step 57, i.e., check the first video channel of the next subscriber, and then goes to step 51.

Through the processing procedure from step 51 to step 59, the limitation of the preview time of video channels for subscribers in the access layer device is implemented.

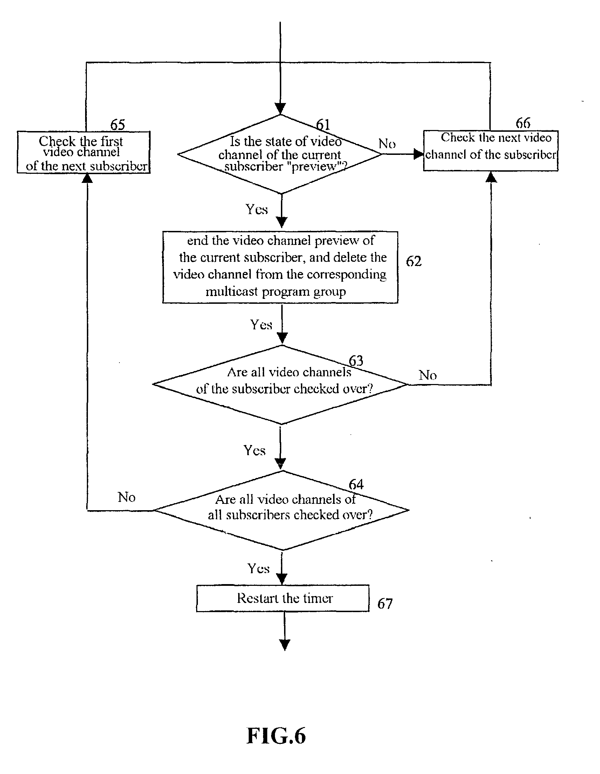

To further improve the processing efficiency, a processing procedure to implement the limitation of the preview time of video channels is shown in FIG.6 according to an embodiment of the present invention. During the processing procedure, a separate timing for each video channel of each subscriber is not performed, and the record of preview timer is not provided in the control table of the subscriber video channel, but a simple processing method is adopted, which starts only one timer, wherein the time of the timer is double of the maximum allowed preview time of the subscriber. For example, the maximum allowed preview time of the subscriber is 30 seconds. After a timer with 1 minute is started, the access layer device checks all video channels of all subscribers when the timer expires; if one state are preview, the access layer device determines the allowed preview time has expired, sends a message to end the subscriber preview and deletes the subscriber from the program group.

In the above solution, as shown in FIG.6, the corresponding processing procedure includes the steps as follows when the timer expires.

In step 61, the access layer device determines whether the video channel state of the current subscriber is preview; if yes, the procedure goes to step 62, otherwise goes to step 66.

In step 62, the access layer device completes the preview of the video channel of the current subscriber, and deletes the multicast channel from the corresponding multicast program group, then the procedure goes to step 63.

In step 63, the access layer device determines whether all video channels of the subscriber are checked over; if yes, the procedure goes to step 64, otherwise goes to step 66.

In step 64, the access layer device determines whether all video channels of all subscribers in the access layer device are checked over; if yes, the procedure goes to step 67, otherwise goes to step 65.

In step 65, the access layer device checks the first video channel of the next subscriber, and goes to step 61.

In step 66, the access layer device checks the next video channel of the subscriber, and goes to step 61.

In step 67, the access layer device restarts the timer.

An embodiment of the present invention further provides a system for implementing preview of multicast video programs in the corresponding broadband access network based on the method for implementing preview of multicast video programs in the broadband access network, which includes:

a video traffic/subscriber management system server, for obtaining the subscriber preview qualification information for video traffic, and sending the qualification information with the program information to the access layer device; and

a video preview processing part, located in the access layer device, for obtaining and storing the preview qualification information and program information. When a subscriber terminal accesses the network through the access layer device and develops video services, the access layer device manages the video traffic developed by the subscriber in accordance with the preview qualification and program information.

At present, the program information is generally configured firstly in the network management server by the video traffic/subscriber management system. Accordingly, in an embodiment of the present invention, the preview qualification information and program information are configured first in the network management server by the video traffic/subscriber management system, and distributed from the network management server to the video preview processing part of the corresponding access layer device through an SNMP protocol interface.

It can be seen that, the present invention implements control and management of timing and times of preview qualification of multicast programs, so that the flexibility and operability of developing video services in the broadband access network are improved effectively.

The above descriptions are preferred embodiments of the present invention, which do not limit the protection scope of the present invention. It is apparent for those skilled in the art that various variations and substitutions can be made without departing from the scope of the present invention. Therefore, the protection scope of the present invention should be defined in the attached claims.

## Claims

1. A method for implementing preview of multicast video program in a broadband access network, comprising:
A. storing preview qualification of a subscriber in an access layer device;
B. controlling, at the access layer device, the subscriber to preview video traffic in accordance with the preview qualification;
C. determining, at the access layer device, whether a time from a previous preview disconnection instant to a present preview request instant is longer than a determined time period in the preview qualification; if so, allowing the subscriber to perform the preview, otherwise not allowing.

2. The method for implementing preview of multicast video program in a broadband access network according to claim 1, further comprising:
creating the preview qualification of the subscriber, and sending the preview qualification together with program information to a network management server through a signaling interface, by a video traffic/subscriber management system;
sending the preview qualification and program information from the network management server to the access layer device through a Simple Network Management Protocol, SNMP, interface.

3. The method for implementing preview of multicast video program in a broadband access network according to claim 1 or 2, wherein the preview qualification further comprises:
one or more selected from whether to allow the subscriber to preview, programs allowed to be previewed, allowed preview time, and preview times allowed within a set time.

4. The method for implementing preview of multicast video program in a broadband access network according to claim 1 or 2, wherein the step of controlling, at the access layer device, the subscriber to preview the video traffic in accordance with the preview qualification further comprises the steps of:
B1. sending a request message for joining the multicast service group under Internet Group Management Protocol, IGMP, from the subscriber to the access layer device;
B2. performing, at the access layer device, preview verification on the request message from the subscriber without qualification of viewing the program, in accordance with information carried in the request message and the stored preview qualification, and allowing the subscriber to perform the program preview upon a successful verification.

5. The method for implementing preview of multicast video program in a broadband access network according to claim 4, wherein the preview verification comprises the steps of:
determining whether the subscriber has a qualification to preview the requested program and whether preview times exceeds the allowed preview times in accordance with the stored preview qualification of the subscriber; if the subscriber has no qualification to preview the requested program or preview times exceeds the allowed preview times, refusing the request from the subscriber;
otherwise allowing the subscriber to preview the program.

6. The method for implementing preview of multicast video program in a broadband access network according to claim 5, further comprising:
in the procedure during which the subscriber previews the requested program, monitoring whether the preview time exceeds the allowed preview time; if yes, terminating the preview.

7. The method for implementing preview of multicast video program in a broadband access network according to claim 6, further comprising:
monitoring whether the preview time of each video channel exceeds the allowed preview time respectively, and terminating only the preview of the video channel with the exceeded preview time;
or monitoring whether the preview time of all video channels exceeds the allowed preview time simultaneously; if yes, terminating the preview of all video channels.

8. The method for implementing preview of multicast video program in a broadband access network according to claim 7, further comprising:
setting a timer for each video channel respectively, performing timing of preview time;
or setting only one timer, performing timing of preview time for each subscriber or each video channel;
or setting only one timer, and setting a counter for each video channel respectively, performing timing of preview time for each video channel through the cooperation of the timer and the counter.

9. The method for implementing preview of multicast video program in a broadband access network according to claim 7, wherein the step of terminating the preview comprises:
deleting the video channel or the subscriber from the multicast program group.

10. The method for implementing preview of multicast video program in a broadband access network according to claim 4, before the step B2, further comprising:
determining, at the access layer device, whether the subscriber has a video channel capable of transmitting video traffic; if yes, going to the step B2 ;
otherwise refusing the request from the subscriber.

11. The method for implementing preview of multicast video program in a broadband access network according to claim 4, after the step of allowing the subscriber to perform the program preview, further comprising:
determining whether the preview duration for the same program is longer than the set time value; if yes, determining the preview is a valid preview, increasing the preview times by 1, and performing a record of log and calling data record;
otherwise, keeping the preview times unchanged, and not performing a record of log and calling data record.

12. A system for implementing preview of multicast video programs in a broadband access network, comprising:
a video traffic/subscriber management system server, for obtaining subscriber preview qualification information for video traffic, and sending the qualification information with the program information to a video preview processing part;
the video preview processing part, located in the access layer device, for obtaining and storing the preview qualification information and program information,
managing the video traffic developed by the subscriber in accordance with the preview qualification and program information, wherein the access layer device is configured to determine whether a time from a previous preview disconnection instant to a present preview request instant is longer than a determined time period in the preview qualification; if so, the access layer device is configured to allow the subscriber to perform the preview, otherwise the access layer device is configured to not allow.

13. The system according to claim 12, further comprising:
a network management server for storing, managing and distributing the preview qualification information and program information.

## Patentansprüche

1. Verfahren zum Implementieren einer Vorschau eines Multicast-Videoprogramms in einem Breitbandzugangsnetz, das Folgendes umfasst:
A. Speichern einer Vorschauqualifikation eines Teilnehmers in einer Zugangsschichtvorrichtung;
B. Steuern an der Zugangsschichtvorrichtung, dass der Teilnehmer Videoverkehr vorher beschaut, gemäß der Vorschauqualifikation;
C. Feststellen an der Zugangsschichtvorrichtung, ob eine Zeit von einem vorherigen Vorschautrennungsmoment bis zu einem gegenwärtigen Vorschauanforderungsmoment länger ist als eine bestimmte Zeitdauer in der Vorschauqualifikation; wenn ja, Zulassen, dass der Teilnehmer die Vorschau ausführt, ansonsten Untersagen.

2. Verfahren zum Implementieren einer Vorschau eines Multicast-Videoprogramms in einem Breitbandzugangsnetz nach Anspruch 1, das ferner Folgendes umfasst:
Erzeugen der Vorschauqualifikation des Teilnehmers und Senden der Vorschauqualifikation zusammen mit Programminformationen zu einem Netzmanagementserver über eine Signalisierungsschnittstelle durch ein Videoverkehr/Teilnehmer-Managementsystem;
Senden der Vorschauqualifikation und der Programminformationen vom Netzmanagementserver zur Zugangsschichtvorrichtung über eine Schnittstelle für ein Simple Network Management Protocol, SNMP.

3. Verfahren zum Implementieren einer Vorschau eines Multicast-Videoprogramms in einem Breitbandzugangsnetz nach Anspruch 1 oder 2, wobei die Vorschauqualifikation ferner Folgendes umfasst:
die Auswahl von einer oder mehreren Möglichkeiten, die umfassen: ob dem Teilnehmer die Vorschau gestattet wird, Programme, deren Vorschau gestattet wird,
einer zulässigen Vorschauzeit und Vorschauzeiten, die innerhalb einer festgelegten Zeit zulässig sind.

4. Verfahren zum Implementieren einer Vorschau eines Multicast-Videoprogramms in einem Breitbandzugangsnetz nach Anspruch 1 oder 2, wobei der Schritt des Steuerns an der Zugangsschichtvorrichtung, dass der Teilnehmer den Videoverkehr vorher beschaut, gemäß der Vorschauqualifikation ferner die folgenden Schritte umfasst:
B1. Senden einer Anforderungsmeldung zum Anschluss an die Multicast-Dienstgruppe unter einem Internet Group Management Protocol, IGMP, vom Teilnehmer zur Zugangsschichtvorrichtung;
B2. an der Zugangsschichtvorrichtung Ausführen einer Vorschauüberprüfung an der Anforderungsmeldung vom Teilnehmer ohne Qualifikation zum Beschauen des Programms gemäß Informationen, die in der Anforderungsmeldung transportiert werden, und der gespeicherten Vorschauqualifikation, und Zulassen, dass der Teilnehmer die Programmvorschau ausführt, bei einer erfolgreichen Überprüfung.

5. Verfahren zum Implementieren einer Vorschau eines Multicast-Videoprogramms in einem Breitbandzugangsnetz nach Anspruch 4, wobei die Vorschauüberprüfung die folgenden Schritte umfasst:
Feststellen, ob der Teilnehmer eine Qualifikation hat, das angeforderte Programm vorher zu beschauen, und ob die Vorschauzeiten die zulässigen Vorschauzeiten überschreiten, gemäß der gespeicherten Vorschauqualifikation des Teilnehmers;
wenn der Teilnehmer keine Qualifikation zum Vorschauen des angeforderten Programms hat oder Vorschauzeiten die zulässigen Vorschauzeiten überschreiten,
Ablehnen der Anforderung vom Teilnehmer; ansonsten Zulassen, dass der Teilnehmer das Programm vorher beschaut.

6. Verfahren zum Implementieren einer Vorschau eines Multicast-Videoprogramms in einem Breitbandzugangsnetz nach Anspruch 5, das ferner Folgendes umfasst:
in der Prozedur, während der der Teilnehmer das angeforderte Programm vorher beschaut, Überwachen, ob die Vorschauzeit die zulässige Vorschauzeit überschreitet;
wenn ja, Beenden der Vorschau.

7. Verfahren zum Implementieren einer Vorschau eines Multicast-Videoprogramms in einem Breitbandzugangsnetz nach Anspruch 6, das ferner Folgendes umfasst:
Überwachen, ob die Vorschauzeit jedes Videokanals jeweils die zulässige Vorschauzeit überschreitet, und Beenden nur der Vorschau des Videokanals mit der überschrittenen Vorschauzeit;
oder Überwachen, ob die Vorschauzeit aller Videokanäle gleichzeitig die zulässige Vorschauzeit überschreitet; wenn ja, Beenden der Vorschau aller Videokanäle.

8. Verfahren zum Implementieren einer Vorschau eines Multicast-Videoprogramms in einem Breitbandzugangsnetz nach Anspruch 7, das ferner Folgendes umfasst:
Setzen eines Zeitgebers jeweils für jeden Videokanal, Ausführen einer Zeitmessung einer Vorschauzeit;
oder Setzen nur eines Zeitgebers, Ausführen einer Zeitmessung einer Vorschauzeit für jeden Teilnehmer oder jeden Videokanal;
oder Setzen nur eines Zeitgebers und Setzen eines Zählers jeweils für jeden Videokanal, Ausführen einer Zeitmessung einer Vorschauzeit für jeden Videokanal durch die Zusammenwirkung des Zeitgebers und des Zählers.

9. Verfahren zum Implementieren einer Vorschau eines Multicast-Videoprogramms in einem Breitbandzugangsnetz nach Anspruch 7, wobei der Schritt des Beendens der Vorschau Folgendes umfasst:
Löschen des Videokanals oder des Teilnehmers aus der Multicast-Programmgruppe.

10. Verfahren zum Implementieren einer Vorschau eines Multicast-Videoprogramms in einem Breitbandzugangsnetz nach Anspruch 4, das vor dem Schritt B2 ferner Folgendes umfasst:
an der Zugangsschichtvorrichtung Feststellen, ob der Teilnehmer einen Videokanal aufweist, der in der Lage ist, Videoverkehr zu übertragen; wenn ja, Gehen zum Schritt B2; ansonsten Ablehnen der Anforderung vom Teilnehmer.

11. Verfahren zum Implementieren einer Vorschau eines Multicast-Videoprogramms in einem Breitbandzugangsnetz nach Anspruch 4, das nach dem Schritt des Zulassens, dass der Teilnehmer die Programmvorschau ausführt, ferner Folgendes umfasst:
Feststellen, ob die Vorschaudauer für dasselbe Programm länger ist als der festgelegte Zeitwert; wenn ja, Bestimmen, dass die Vorschau eine gültige Vorschau ist, Erhöhen der vorgegebenen Zeiten um 1 und Ausführen einer Protokollaufzeichnung und einer Aufrufdatenaufzeichnung;
ansonsten kein Verändern der Vorschauzeiten und kein Ausführen einer Protokollaufzeichnung und Aufrufdatenaufzeichnung.

12. System zum Implementieren einer Vorschau von Multicast-Videoprogrammen in einem Breitbandzugangsnetz, das Folgendes umfasst:
einen Videoverkehr/Teilnehmer-Managementsystemserver zum Erhalten von Teilnehmervorschauqualifikations-Informationen für Videoverkehr und Senden der Qualifikationsinformationen mit den Programminformationen zu einem Videovorschau-Verarbeitungsteil; den Videovorschau-Verarbeitungsteil, der sich in der Zugangsschichtvorrichtung befindet, zum Erhalten und Speichern der Vorschauqualifikationsinformationen und Programminformationen, Managen des durch den Teilnehmer entwickelten Videoverkehrs gemäß den Vorschauqualifikations- und Programminformationen, wobei die Zugangsschichtvorrichtung dazu konfiguriert ist, festzustellen, ob eine Zeit von einem vorherigen Vorschautrennungsmoment bis zu einem gegenwärtigen Vorschauanforderungsmoment länger ist als eine bestimmte Zeitdauer in der Vorschauqualifikation; wenn ja, ist die Zugangsschichtvorrichtung dazu konfiguriert,
dem Teilnehmer zu gestatten, die Vorschau auszuführen, ansonsten ist die Zugangsschichtvorrichtung dazu konfiguriert, dies zu untersagen.

13. System nach Anspruch 12, das ferner Folgendes umfasst:
einen Netzmanagementserver zum Speichern, Managen und Verteilen der Vorschauqualifikationsinformationen und Programminformationen.

## Revendications

1. Procédé de réalisation d'une prévisualisation d'un programme vidéo multidiffusion dans un réseau d'accès à large bande, comprenant les étapes consistant à :
A. mémoriser une qualification de prévisualisation d'un abonné dans un dispositif de couche d'accès ;
B. commander, au niveau du dispositif de couche d'accès, l'abonné afin de prévisualiser le trafic vidéo en fonction de la qualification de prévisualisation ;
C. déterminer, au niveau du dispositif de couche d'accès, si une durée depuis un instant de déconnexion de prévisualisation antérieur jusqu'à un instant de demande de prévisualisation présent est plus longue ou non qu'une période de temps déterminée dans la qualification de prévisualisation ; dans l'affirmative, autoriser l'abonné à effectuer la prévisualisation, dans la négative, interdire à l'abonné d'effectuer la prévisualisation.

2. Procédé de réalisation d'une prévisualisation d'un programme vidéo multidiffusion dans un réseau d'accès à large bande selon la revendication 1, comprenant en outre :
la création de la qualification de prévisualisation de l'abonné, et l'envoi de la qualification de prévisualisation avec des informations de programme à un serveur de gestion de réseau par le biais d'une interface de signalisation, par un système de gestion de trafic vidéo/d'abonné ;
l'envoi de la qualification de prévisualisation et des informations de programme par le serveur de gestion de réseau au dispositif de couche d'accès par le biais d'une interface de Protocole de Gestion de Réseau Simple, SNMP.

3. Procédé de réalisation d'une prévisualisation d'un programme vidéo multidiffusion dans un réseau d'accès à large bande selon la revendication 1 ou 2, dans lequel la qualification de prévisualisation comprend en outre :
la sélection d'une ou plusieurs des options suivantes : permettre ou non à l'abonné d'effectuer la prévisualisation, les programmes pouvant être prévisualisés, la durée de prévisualisation autorisée, et les durées de prévisualisation autorisées dans un laps de temps préétabli.

4. Procédé de réalisation d'une prévisualisation d'un programme vidéo multidiffusion dans un réseau d'accès à large bande selon la revendication 1 ou 2, dans lequel l'étape de commande, au niveau du dispositif de couche d'accès, de l'abonné afin de prévisualiser le trafic vidéo en fonction de la qualification de prévisualisation comprend en outre les étapes consistant à :
B1. envoyer un message de demande pour se joindre au groupe de services de multidiffusion selon le Protocole de Gestion de Groupe Internet, IGMP, de l'abonné au dispositif de couche d'accès ;
B2. exécuter, au niveau du dispositif de couche d'accès, une vérification de prévisualisation sur le message de demande de l'abonné non qualifié pour visualiser le programme, en fonction d'informations portées dans le message de demande et de la qualification de prévisualisation mémorisée, et autoriser l'abonné à effectuer la prévisualisation du programme après une vérification positive.

5. Procédé de réalisation d'une prévisualisation d'un programme vidéo multidiffusion dans un réseau d'accès à large bande selon la revendication 4, dans lequel la vérification de prévisualisation comprend les étapes consistant à :
déterminer si l'abonné est ou non qualifié pour prévisualiser le programme demandé, et si les durées de prévisualisation dépassent ou non les durées de prévisualisation autorisées en fonction de la qualification de prévisualisation mémorisée de l'abonné ;
si l'abonné n'est pas qualifié pour prévisualiser le programme demandé ou si les durées de prévisualisation dépassent les durées de prévisualisation autorisées, refuser la demande de l'abonné ; sinon, autoriser l'abonné à prévisualiser le programme.

6. Procédé de réalisation d'une prévisualisation d'un programme vidéo multidiffusion dans un réseau d'accès à large bande selon la revendication 5, comprenant en outre :
dans la procédure durant laquelle l'abonné prévisualise le programme demandé, le contrôle si la durée de prévisualisation dépasse ou non la durée de prévisualisation autorisée ; dans l'affirmative, l'arrêt de la prévisualisation.

7. Procédé de réalisation d'une prévisualisation d'un programme vidéo multidiffusion dans un réseau d'accès à large bande selon la revendication 6, comprenant en outre :
le contrôle si la durée de prévisualisation de chaque canal vidéo dépasse ou non la durée de prévisualisation autorisée respectivement, et l'arrêt uniquement de la prévisualisation du canal vidéo présentant un dépassement de la durée de prévisualisation ;
ou le contrôle si la durée de prévisualisation de tous les canaux vidéo dépasse ou non la durée de prévisualisation autorisée simultanément ; dans l'affirmative, l'arrêt de la prévisualisation de tous les canaux vidéo.

8. Procédé de réalisation d'une prévisualisation d'un programme vidéo multidiffusion dans un réseau d'accès à large bande selon la revendication 7, comprenant en outre :
le réglage d'une temporisation pour chaque canal vidéo respectivement, chronométrant la durée de prévisualisation ;
ou le réglage d'une seule temporisation, chronométrant la durée de prévisualisation pour chaque abonné ou chaque canal vidéo ;
ou le réglage d'une seule temporisation, et le réglage d'un compteur pour chaque canal vidéo respectivement, chronométrant la durée de prévisualisation de chaque canal vidéo par la coopération de la temporisation et du compteur.

9. Procédé de réalisation d'une prévisualisation d'un programme vidéo multidiffusion dans un réseau d'accès à large bande selon la revendication 7, dans lequel l'étape d'arrêt de la prévisualisation comprend :
la suppression du canal vidéo ou de l'abonné du groupe de programmes de multidiffusion.

10. Procédé de réalisation d'une prévisualisation d'un programme vidéo multidiffusion dans un réseau d'accès à large bande selon la revendication 4, comprenant en outre avant l'étape B2 :
l'étape consistant à déterminer, au niveau du dispositif de couche d'accès, si l'abonné dispose ou non d'un canal video capable de transmettre un trafic vidéo ; dans l'affirmative, passer à l'étape B2 ; dans la négative, refuser la demande de l'abonné.

11. Procédé de réalisation d'une prévisualisation d'un programme vidéo multidiffusion dans un réseau d'accès à large bande selon la revendication 4, comprenant en outre après l'étape d'autorisation de l'abonné à prévisualiser le programme, l'étape consistant à :
déterminer si la durée de prévisualisation du même programme est plus longue ou non que la durée établie ; dans l'affirmative, établir que la prévisualisation est une prévisualisation valable, augmenter les durées de prévisualisation de 1, et procéder à un enregistrement au journal et un enregistrement de données d'appel ;
dans la négative, laisser les durées de prévisualisation inchangées, et ne pas exécuter d'enregistrement au journal et d'enregistrement de données d'appel.

12. Système de réalisation d'une prévisualisation de programmes vidéo multidiffusion dans un réseau d'accès à large bande, comprenant :
un serveur de système de gestion de trafic vidéo/d'abonné, pour obtenir des informations de qualification de prévisualisation d'abonné du trafic vidéo, et envoyer les informations de qualification avec les informations de programme à une partie de traitement de prévisualisation vidéo ;
la partie de traitement de prévisualisation vidéo, située dans le dispositif de couche d'accès, pour obtenir et mémoriser les informations de qualification de prévisualisation et les informations de programme, gérer le trafic vidéo développé par l'abonné en fonction des informations de qualification de prévisualisation et de programme, le dispositif de couche d'accès étant configuré pour déterminer si une durée depuis un instant de déconnexion de prévisualisation antérieur jusqu'à un instant de demande de prévisualisation présent est plus longue ou non qu'une période de temps déterminée dans la qualification de prévisualisation ; dans l'affirmative, le dispositif de couche d'accès est configuré pour autoriser l'abonné à effectuer la prévisualisation, dans la négative, le dispositif de couche d'accès est configuré pour interdire à l'abonné d'effectuer la prévisualisation.

13. Système selon la revendication 12, comprenant en outre :
un serveur de gestion de réseau pour mémoriser, gérer et distribuer les informations de qualification de prévisualisation et les informations de programme.
